(19) Europäisches Patentamt / European Patent Office / Office européen des brevets

(11) **EP 4 629 527 A1**

(12) **EUROPEAN PATENT APPLICATION**
published in accordance with Art. 153(4) EPC

(43) Date of publication:
08.10.2025 Bulletin 2025/41

(21) Application number: 23910834.3

(22) Date of filing: 28.12.2023

(51) International Patent Classification (IPC):
*H04B 10/2575* (2013.01)    *H04B 10/50* (2013.01)
*H04B 10/40* (2013.01)

(52) Cooperative Patent Classification (CPC):
H04B 10/2575; H04B 10/40; H04B 10/50;
H04B 10/516

(86) International application number:
PCT/CN2023/142787

(87) International publication number:
WO 2024/140918 (04.07.2024 Gazette 2024/27)

(84) Designated Contracting States:
AL AT BE BG CH CY CZ DE DK EE ES FI FR GB
GR HR HU IE IS IT LI LT LU LV MC ME MK MT NL
NO PL PT RO RS SE SI SK SM TR
Designated Extension States:
BA
Designated Validation States:
KH MA MD TN

(30) Priority: 29.12.2022 CN 202211713497

(71) Applicant: Huawei Technologies Co., Ltd.
Shenzhen, Guangdong 518129 (CN)

(72) Inventors:
• WANG, Xiangchuan
  Nanjing, Jiangsu 211106 (CN)
• ZHANG, Jiangtao
  Nanjing, Jiangsu 211106 (CN)
• PAN, Shilong
  Nanjing, Jiangsu 211106 (CN)
• MENG, Chenkai
  Nanjing, Jiangsu 211106 (CN)
• LIU, Xian
  Shenzhen, Guangdong 518129 (CN)
• MA, Cong
  Nanjing, Jiangsu 211106 (CN)
• DU, Changlong
  Nanjing, Jiangsu 211106 (CN)
• WANG, Hui
  Shenzhen, Guangdong 518129 (CN)
• LIU, Shifeng
  Nanjing, Jiangsu 211106 (CN)
• CAO, Fengting
  Nanjing, Jiangsu 211106 (CN)
• ZHANG, Zhijian
  Nanjing, Jiangsu 211106 (CN)

(74) Representative: Gill Jennings & Every LLP
The Broadgate Tower
20 Primrose Street
London EC2A 2ES (GB)

(54) **SYSTEM AND SIGNAL GENERATION METHOD**

(57)    A system is provided and used in the radar field. The system includes: a wideband signal generation unit, configured to generate a first wideband signal; a second signal generation unit, configured to generate a first single-frequency signal; a first frequency multiplication unit, configured to perform frequency multiplication on the first wideband signal in optical domain to obtain a second wideband signal; a second frequency multiplication unit, configured to perform frequency multiplication on the first single-frequency signal to obtain a second single-frequency signal; and a frequency mixing unit, configured to perform frequency mixing on the second wideband signal and the second single-frequency signal to obtain a millimeter-wave signal. In this application, frequency multiplication is performed on a single-frequency signal in electrical domain and on a wideband signal in optical domain, so that a millimeter-wave signal with low phase noise can be obtained.

EP 4 629 527 A1

```
┌─────────────────┐                    ┌──────────────────────┐
│ Wideband signal │         Clock      │ Second signal generation │
│ generation unit │◄────── injection   │       unit 11        │
│       121       │                    │ (such as an optoelectronic │
└─────────────────┘                    │     oscillator)      │
         │                             └──────────────────────┘
         ▼                                        │
┌─────────────────┐  ┌─────────────────┐          │
│ Laser generation │- │  Electro-optic  │          ▼
│     unit 13     │─►│  modulator 122  │
└─────────────────┘  └─────────────────┘
                              ┊
                              ▼
         ┌─────────────────┐          ┌─────────────────┐
         │ First frequency │          │ Second frequency │
         │ multiplication unit 14 │   │ multiplication unit 15 │
         └─────────────────┘          └─────────────────┘
                    \                        /
                     ▼                      ▼
              ┌───────────────────────────────┐
              │   Frequency mixing unit 16    │
              └───────────────────────────────┘
                              │
                              ▼
```

FIG. 5

**Description**

This application claims priority to Chinese Patent Application No. 202211713497.2, filed with the China National Intellectual Property Administration on December 29, 2022 and entitled "SYSTEM AND SIGNAL GENERATION METHOD", which is incorporated herein by reference in its entirety.

## TECHNICAL FIELD

This application relates to the radar field, and in particular, to a system and a signal generation method.

## BACKGROUND

As communication and radar technologies and the like rapidly develop, an electromagnetic environment becomes increasingly complex, leading to a higher signal frequency. Featuring a wide frequency band, a narrow beam, a strong anti-interference capability, and the like, a millimeter-wave signal is widely used in vehicle driving assistance, wireless communication, and other fields.

At present, methods for generating a millimeter-wave signal using a traditional electronic technology mainly include a generation method using a millimeter-wave phase-locked loop.

In the generation method using a millimeter-wave phase-locked loop, an output frequency of a voltage-controlled oscillator (voltage-controlled oscillator, VCO) is positively correlated with a drive voltage. Therefore, a voltage that linearly changes over time may be used to drive the voltage-controlled oscillator (VCO), to generate a linear frequency-modulated signal. However, the linear frequency-modulated signal directly generated in this way has poor linearity. The linearity of the generated signal can be improved by locking the linear frequency-modulated signal to a reference source with good performance via a phase-locked loop. Because it is difficult for the phase-locked loop to directly generate a high-frequency millimeter-wave signal, up-conversion needs to be performed on the signal. However, up-conversion on two electrical signals continues to increase previously high phase noise. Therefore, a method that can generate a millimeter-wave signal with low phase noise is urgently needed.

## SUMMARY

According to a first aspect, this application provides a system, including: a wideband signal generation unit, configured to generate a first wideband signal; a second signal generation unit, configured to generate a first single-frequency signal, where the second signal generation unit is an optoelectronic oscillator, and the first single-frequency signal is further used as a clock signal of the wideband signal generation unit; a first frequency multiplication unit, configured to perform frequency multiplication on the first wideband signal in optical domain to obtain a second wideband signal; a second frequency multiplication unit, configured to perform frequency multiplication on the first single-frequency signal to obtain a second single-frequency signal; and a frequency mixing unit, configured to perform frequency mixing on the second wideband signal and the second single-frequency signal to obtain a millimeter-wave signal.

In this application, the second signal generation unit may generate a microwave signal (namely, the first single-frequency signal) with low phase noise. The first single-frequency signal may be used as a local oscillator signal of a low-frequency wideband signal generation unit (for example, the wideband signal generation unit in embodiments of this application). In addition, frequency multiplication may be performed on the first single-frequency signal in electrical domain to generate a high-frequency single-frequency signal with low phase noise. Phase noise is an important factor that determines signal quality. A local oscillator source with lower phase noise can increase a signal-to-noise ratio of a wideband signal. In addition, frequency multiplication on a wideband signal in electrical domain causes in-band aliasing. Therefore, frequency multiplication is performed on a low-frequency wideband signal in optical domain. In embodiments of this application, frequency multiplication is performed on a single-frequency signal in electrical domain and on a wideband signal in optical domain, and then frequency mixing is performed on signals obtained after frequency multiplication, so that a millimeter-wave signal with low phase noise can be obtained.

It should be understood that an electro-optic modulator, a laser generation unit, and the first frequency multiplication unit may form an optical frequency multiplication system. For example, a mach-zehnder modulator may be optionally used for implementing frequency multiplication.

In a possible implementation, phase noise of the first single-frequency signal is lower than -105 dBc/Hz when a frequency offset is greater than 1 kHz.

In a possible implementation, the optoelectronic oscillator may generate a microwave signal (namely, the first single-frequency signal) with low phase noise. The first single-frequency signal may be used as a local oscillator signal of a low-frequency wideband signal generation unit (for example, the wideband signal generation unit in embodiments of this application). In addition, frequency multiplication may be performed on the first single-frequency signal in electrical domain to generate a high-frequency single-frequency signal with low phase noise.

The optoelectronic oscillator is a new type of injection locking phase-locked optoelectronic oscillator, which has excellent performance and high feasibility in reducing phase noise and improving stability and spurious suppression of the optoelectronic oscillator. The optoelectronic oscillator may reduce the phase noise by more than 20 dBc when the frequency offset is greater than 1 kHz.

In a possible implementation, the system further includes the electro-optic modulator. The electro-optic modulator is configured to modulate the first wideband signal onto an optical carrier. The first frequency multiplication unit is specifically configured to perform frequency multiplication on the first wideband signal modulated onto the optical carrier.

In a possible implementation, when generating the first wideband signal, the wideband signal generation unit is specifically configured to generate the first wideband signal using the first single-frequency signal as a clock signal. In other words, the wideband signal generation unit uses an optoelectronic local oscillator signal with low phase noise for clock injection. In comparison with an internal clock solution, a signal output by the wideband signal generation unit has low phase noise and a high signal-to-noise ratio.

In a possible implementation, a quantity of times frequency multiplication is performed on the first wideband signal in optical domain is less than a quantity of times frequency multiplication is performed on the first single-frequency signal. It should be understood that efficiency of performing frequency multiplication for a plurality of times in optical domain is low. Therefore, more frequency components in frequency mixing are generated in electrical domain as much as possible.

In a possible implementation, the wideband signal generation module may be an arbitrary waveform generator, a direct digital frequency synthesis signal generator, or the like. As a special signal source, the arbitrary waveform generator not only has a basic function of a conventional signal generator, but also can simulate and generate a more complex and variable waveform that cannot be implemented by another signal generator. The arbitrary waveform generator has an internal clock and an external clock injection port. Both types of clocks may be used to drive a required signal to be generated (in embodiments of this application, the first single-frequency signal may be injected into the external clock injection port). The direct digital frequency synthesis signal generator can improve frequency stability and accuracy of the signal generator to a same level as a reference frequency, and perform fine frequency adjustment in a wide frequency range. A signal source designed through this method can work in a modulation state, adjust an output level, and output various waveforms.

In a possible implementation, the wideband signal generation unit may receive a control signal. The control signal indicates at least one of signal waveform, signal frequency, signal bandwidth, signal periodicity, and signal duty cycle. The wideband signal generation unit generates, based on the control signal, the first wideband signal that meets a requirement of the control signal. The wideband signal generation module is configured to generate a low-frequency linear frequency-modulated signal. The low-frequency wideband signal generation unit not only can generate a low-frequency wideband signal with low phase noise and a high signal-to-noise ratio, but also can adjust waveform, frequency, bandwidth, periodicity, duty cycle, and another parameter of the wideband signal because the generated signal is not limited by an injected clock signal and has universality.

In a possible implementation, the system further includes the laser generation unit, configured to generate the optical carrier.

In a possible implementation, the system further includes a transmitting unit, configured to transmit the millimeter-wave signal to an environment.

According to a second aspect, this application provides a signal generation method. The method includes:

generating, by a wideband signal generation unit, a first wideband signal;

generating, by a second signal generation unit, a first single-frequency signal, where the second signal generation unit is an optoelectronic oscillator, and the first single-frequency signal is further used as a clock signal of the wideband signal generation unit;

performing, by a first frequency multiplication unit, frequency multiplication on the first wideband signal in optical domain to obtain a second wideband signal;

performing, by a second frequency multiplication unit, frequency multiplication on the first single-frequency signal to obtain a second single-frequency signal; and

performing, by a frequency mixing unit, frequency mixing on the second wideband signal and the second single-frequency signal to obtain a millimeter-wave signal.

In a possible implementation, phase noise of the first single-frequency signal is lower than -105 dBc/Hz when a frequency offset is greater than 1 kHz.

In a possible implementation, the system further includes an electro-optic modulator, and the method further includes:

modulating, by the electro-optic modulator, the first wideband signal onto an optical carrier.

In a possible implementation, when generating the first wideband signal, the wideband signal generation unit is specifically configured to generate the first wideband signal using the first single-frequency signal as a clock signal.

In a possible implementation, a quantity of times frequency multiplication is performed on the first wideband signal in optical domain is less than a quantity of times frequency multiplication is performed on the first single-frequency signal.

In a possible implementation, generating, by the wideband signal generation unit, the first wideband signal includes:

receiving a control signal, where the control signal indicates at least one of signal waveform, signal frequency, signal bandwidth, signal periodicity, and signal duty cycle; and

generating, by the wideband signal generation unit based on the control signal, the first wideband signal that meets a requirement of the control signal.

In a possible implementation, the method further includes:
generating, by a laser generation unit, the optical carrier.

In a possible implementation, the method further includes:
transmitting, by a transmitting unit, the millimeter-wave signal to an environment.

According to a third aspect, this application provides a radar system, including a transmitter and a receiver.

The transmitter includes the system according to the second aspect.

The receiver is configured to receive a reflected signal of a signal transmitted by the transmitter.

In a possible implementation, the system is a chip.

According to a fourth aspect, this application provides a device, including the radar system according to the third aspect and a processing circuit.

The processing circuit is configured to process the reflected signal received by the receiver in the radar system, to obtain a processing result. The processing result is used for object detection.

In a possible implementation, the device is a smart home device or a vehicle-mounted device.

## BRIEF DESCRIPTION OF DRAWINGS

FIG. 1a is a diagram of a scenario according to an embodiment of this application;
FIG. 1b is a diagram of a scenario according to an embodiment of this application;
FIG. 1c is a diagram of a scenario according to an embodiment of this application;
FIG. 2 is a diagram of a scenario according to an embodiment of this application;
FIG. 3 is a diagram of a scenario according to an embodiment of this application;
FIG. 4 is a diagram of a structure of a system according to an embodiment of this application;
FIG. 5 is a diagram of a structure of a system according to an embodiment of this application;
FIG. 6 is a diagram of a partial structure of a system according to an embodiment of this application;
FIG. 7 is a diagram of a partial structure of a system according to an embodiment of this application;
FIG. 8 is a diagram of a structure of a system according to an embodiment of this application; and
FIG. 9 is a diagram of a structure of a system according to an embodiment of this application.

## DESCRIPTION OF EMBODIMENTS

The following describes embodiments of this application with reference to the accompanying drawings in embodiments of this application. Terms used in implementations of this application are merely used to explain specific embodiments of this application, but are not intended to limit this application.

In the specification, claims, and accompanying drawings of this application, the terms "first", "second", and the like are intended to distinguish between similar objects but do not necessarily indicate a specific order or sequence. It should be understood that the terms used in such a way are interchangeable in proper circumstances, which is merely a discrimination manner that is used when objects having a same attribute are described in embodiments of this application. In addition, the terms "include", "contain", and any other variants mean to cover the non-exclusive inclusion, so that a process, method, system, product, or device that includes a series of units is not necessarily limited to those units, but may include other units not expressly listed or inherent to such a process, method, system, product, or device.

The following describes embodiments of this application with reference to the accompanying drawings. A person of ordinary skill in the art may learn that, with development of technologies and emergence of a new scenario, the technical solutions provided in embodiments of this application are also applicable to a similar technical problem. First, an application scenario of embodiments of this application is described.

Embodiments of this application may be applied to a scenario in which object detection needs to be performed, such as a smart home or a smart cabin.

For example, embodiments of this application may be applied to a vehicle-mounted millimeter-wave radar for vehicle driving assistance, a roadside millimeter-wave radar for traffic situation awareness of high-speed and urban roads and intersections and a digital twin of road traffic information, a foreign object detection radar for airport tracks, an airport perimeter radar, a perimeter radar in border and sea defense for intrusion detection of vehicles, ships, people, and the like, and a perimeter radar for intrusion detection of foreign objects in scenarios such as railways and oil and gas pipelines. Embodiments of this application may be further applied to a base station and a terminal device that integrate communication and sensing. In this case, a signal-to-noise ratio is increased to improve detection performance of a sensing system and a communication capacity of a communication system.

The following separately describes architectures of the foregoing application scenarios with reference to product architectures included in the scenarios.

Scenario 1: Smart home

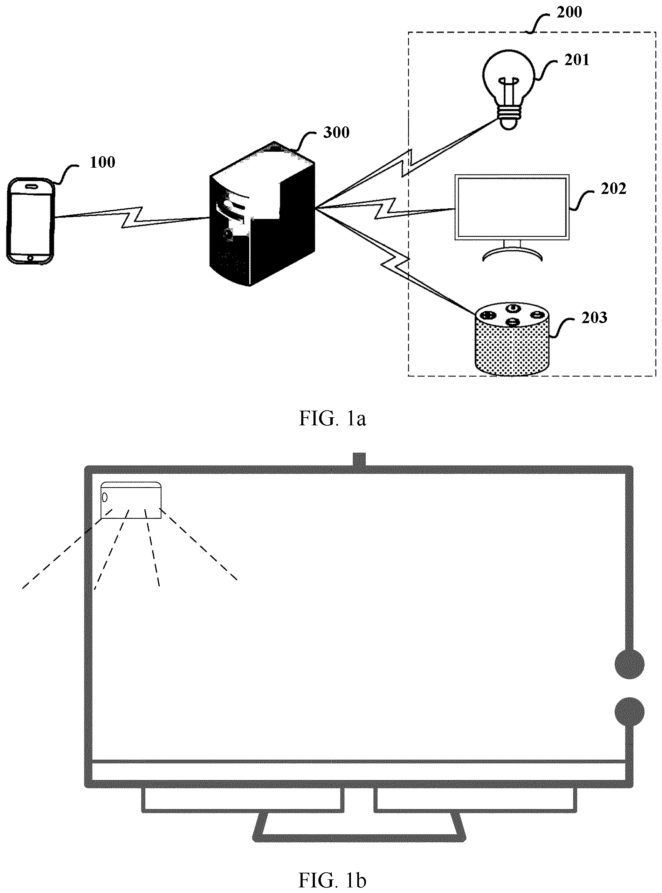

FIG. 1a is a diagram of a structure of a smart home system according to an embodiment of this application. As shown in FIG. 1a, the smart home system may include an electronic device 100 (optional), one or more smart home devices 200, and a cloud server 300 (optional).

About the electronic device 100:

The electronic device 100 may be a portable electronic device, for example, a mobile phone, a tablet, a personal digital assistant (personal digital assistant, PDA), or a wearable device. An example embodiment of the portable electronic device includes but is not limited to a portable electronic device using iOS, Android, Microsoft, or another operating system. The portable electronic device may alternatively be another portable electronic device, for example, a laptop (laptop) with a touch-sensitive surface (for example, a touch panel). It should be further understood that in some other embodiments of this application, the electronic device 100 may alternatively be a desktop computer with a touch-sensitive surface (for example, a touch panel), but not a portable electronic device.

An application (application, APP) used to manage a smart home device may be installed on the electronic device 100. Alternatively, the electronic device 100 may access a world wide web (world wide web, web) page used to manage a smart home device. The application or web page used to manage the smart home device may be developed and provided by a manufacturer of the smart home device (such as a manufacturer (for example, Huawei) of a smart router).

About the smart home devices 200:

A smart home device is an intelligent device that can exchange information through a wireless communication technology and even learn autonomously. It can provide a user with a convenient and effective service, to reduce the user's labor. The smart home devices 200 may include a smart socket, a smart door lock, a smart lamp, a smart fan, a smart air conditioner, a smart curtain, a smart television, a smart rice cooker, a smart router, and the like. For example, as shown in FIG. 1a, the smart home devices 200 may include a smart lamp 201, a smart television 202, and a smart speaker 203. The smart lamp 201 may control a change in light, for example, a change in a color and luminance of the light. The smart television 202 may perform voice interaction with a user, for example, may receive a voice control instruction of the user and play a favorite television program of the user.

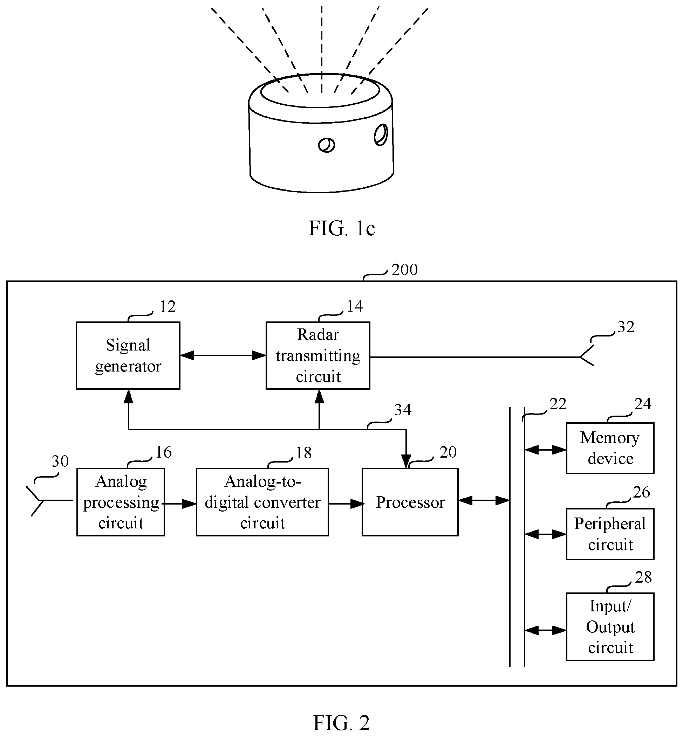

The smart home device 200 may be configured with a radar system (for an architecture of the radar system, refer to FIG. 2). The radar system may transmit a radar signal (for example, a signal generated by a system provided in embodiments of this application) to a monitored area and receive a reflected signal of the radar signal. By analyzing and processing the reflected signal, it is possible to determine a status (for example, moving, sleep, or static) of an object in the monitored area or recognize information about a gesture (for example, determine a type or motion feature of the gesture).

About the radar system:

Based on different specific implementations of the radar system, the radar signal may have various carriers. For example, if the radar system is a microwave or millimeter-wave radar, the radar signal is a microwave or millimeter-wave signal. If the radar system is an ultrasonic radar, the radar signal is an ultrasonic signal. If the radar system is a lidar, the radar signal is a laser first wideband signal in optical domain. It should be noted that if the radar system integrates various radars, the radar signal may be a set of various radar signals. This is not limited herein.

The radar system may generate a radar signal and transmit the radar signal to an area that the radar system is monitoring. With reference to FIG. 2, signal generation and transmission may be implemented by a radio frequency (radio frequency, RF) signal generator 12, a radar transmitting circuit 14, and a transmitting antenna 32. The signal generator 12, the radar transmitting circuit 14, and the transmitting antenna 32 may form a transmitter of the radar system.

The system provided in embodiments of this application may be the signal generator 12.

The radar transmitting circuit 14 generally includes any circuit for generating a signal to be transmitted by the transmitting antenna 32, such as a pulse shaping circuit, a transmission trigger circuit, an RF switch circuit, or another appropriate transmitting circuit. The RF signal generator 12 and the radar transmitting circuit 14 may be controlled by a processor 20. The processor sends out a command and a control signal through a control line 34, so that the transmitting antenna 32 transmits an expected RF signal having an expected configuration and an expected signal parameter.

The radar system may further receive a returned radar signal at an analog processing circuit 16 through a receiving antenna 30. The returned radar signal may be referred to as an "echo", "radar data", an "echo signal", "echo data", or a "reflected signal". The analog processing circuit 16 generally includes any circuit for processing the signal received through the receiving antenna 30 (such as performing signal separation, mixing, heterodyning and/or homodyne conversion, amplification, filtering, received signal triggering, signal switching and routing, and/or another appropriate radar signal reception function). Therefore, the analog processing circuit 16 generates one or more analog signals, such as an in-phase (I) analog signal and a quadrature (Q) analog signal. The analog signal is transmitted to an analog-to-digital converter (analog-to-digital converter, ADC) circuit 18, and digitized by the circuit. A digitized signal is then forwarded to the processor 20 for processing the reflected signal.

It should be understood that the radar system may alternatively be deployed independently of the smart home device 200, but not deployed in the smart home device 200.

For example, the smart home device 200 is a smart display. With reference to FIG. 1b, the radar system may be deployed at, but not limited to, a corner position of an upper frame of the display shown in FIG. 1b. With reference to FIG. 1c, the radar system may alternatively be deployed independently of the smart home device 200, and is disposed in a smart home scenario as an independent sensing unit.

About the processor:

The processor 20 may be one of various processors for implementing the following functions: The processor is capable of processing the digitized received signal and controlling the RF signal generator 12 and the radar transmitting circuit 14 to provide a radar operation and function of the terminal device 100. Therefore, the processor 20 may be a digital signal processor (digital signal processor, DSP), a microprocessor, a microcontroller, or any other device of this type.

In some implementations, the processor 20 may include hardware circuits (for example, an application-specific integrated circuit (application-specific integrated circuit, ASIC), a field-programmable gate array (field-programmable gate array, FPGA), a general-purpose processor, a digital signal processor (digital signal processor, DSP), a microprocessor, or a microcontroller), or a combination thereof. For example, the processor 20 may be a hardware system having an instruction execution function, for example, a CPU or a DSP, a hardware system having no instruction execution function, for example, an ASIC or an FPGA, or a combination of the foregoing hardware system having no instruction execution function and the foregoing hardware system having an instruction execution function.

To perform the radar operation and function of the radar system, the processor 20 is connected to one or more other required circuits (for example, one or more memory devices 24 including one or more types of memories, any required peripheral circuit 26, and any required input/output circuit 28) through a system bus 22.

The processor 20 may be connected to the RF signal generator 12 and the radar transmitting circuit 14 through the control line 34. In an alternative embodiment, the RF signal generator 12 and/or the radar transmitting circuit 14 may be connected to the bus 22, so that the RF signal generator 12 and/or the radar transmitting circuit 14 can communicate with one or more of the processor 20, the memory device 24, the peripheral circuit 26, and the input/output circuit 28 through the bus 22.

It should be understood that the smart home system may include a plurality of smart home devices having a data processing capability, and there is a communication connection relationship between the smart home devices. Therefore, distributed computing can be implemented through the plurality of smart home devices in the smart home system. In this way, the foregoing processing to determine the gesture indicated by the reflected signal and gesturerelated information can be implemented by the plurality of smart home devices in the smart home system.

In embodiments of this application, the processor 20 may obtain code stored in the memory device 24 (or a memory device deployed separately from the processor 20), to implement a function adjustment method in embodiments of this application.

The smart home device 200 may be configured with a wireless communication module. The smart home device 200 may establish a communication connection to the cloud server 300 through the wireless communication module.

About the wireless communication module:

The wireless communication module may provide one or more wireless communication modes applied to the smart home device 200 and including a wireless local area network (wireless local area network, WLAN) (for example, a wireless fidelity (wireless fidelity, Wi-Fi) network), Bluetooth (Bluetooth, BT), a near field communication (near field communication, NFC) technology, an infrared (infrared, IR) technology, or the like. In some embodiments, the smart home device 200 may be further configured with a mobile communication module. The mobile communication module may provide a solution applied to the electronic device 100 and including a wireless communication technology such as 2G, 3G, 4G, or 5G.

The smart home device 200 may be connected to a network through the wireless communication module or the mobile communication module, and further communicate with the cloud server 300 to receive data, an instruction, or the like from the cloud server 300. Alternatively, the smart home device 200 may report data, its working status and parameter, or the like to the cloud server 300.

Scenario 2: Smart cabin

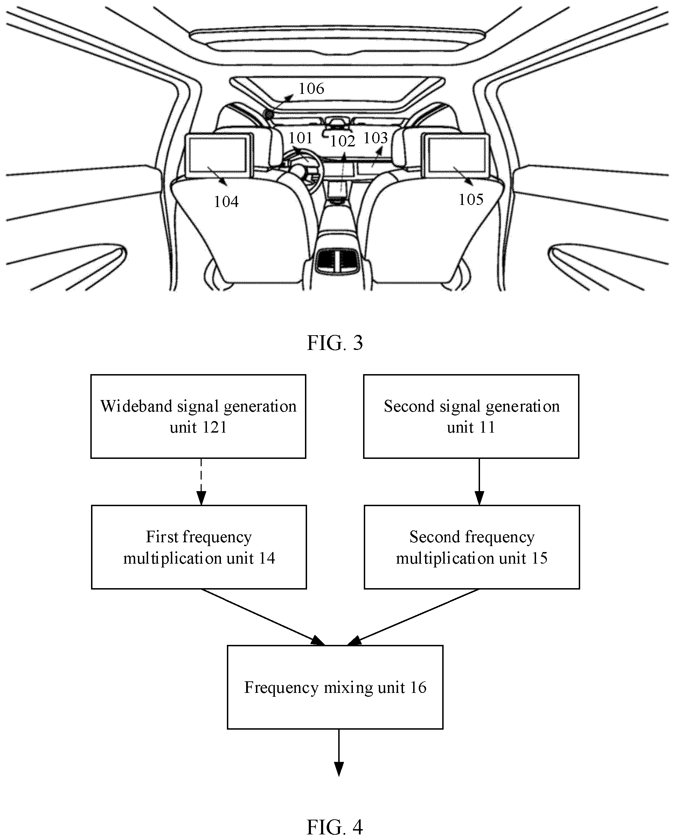

FIG. 3 is a diagram of a structure of an interior of a vehicle according to an embodiment of this application. Currently, in the field of vehicles, a vehicle-mounted terminal, for example, a vehicle-mounted machine (also referred to as an in-vehicle audio and video entertainment system), may be fastened to a center console of a vehicle, and a screen of the vehicle-mounted terminal may also be referred to as a central control display or a central control screen. In addition, fully digital display is gradually implemented in a cabin of some high-end vehicles, and one or more displays are disposed in the cabin to display a digital dashboard, an in-vehicle entertainment system, and other content. As shown in FIG. 3, a plurality of displays are disposed in a cabin, for example, a digital dashboard display 101, a central control screen 102, a display 103 in front of a passenger in a co-driver seat (also referred to as a passenger in a front seat), a display 104 in front of a passenger in a rear-left seat, and a display 105 in front of a passenger in a rear-right seat.

In addition, a radar system (which may also be referred to as a radar for short in subsequent embodiments) may be further deployed inside the vehicle. Although FIG. 3 shows only one radar 106 near an A-pillar (pillar) on a driver side, a plurality of radars may be disposed in the cabin. A position of the radar is also flexible. For example, the radar may be disposed above the central control screen of the vehicle, to the left of the central control screen of the vehicle, at the A-pillar or a B-pillar, at the top front of the cabin of the vehicle, or in the central control screen of the vehicle. For a specific description of the radar, refer to the description of the radar system in FIG. 2 in the foregoing embodiment.

The vehicle 200 may be a car, a truck, a motorcycle, a bus, a boat, an airplane, a helicopter, a lawn mower, a recreational vehicle, a playground vehicle, a construction device, a trolley, a golf cart, a train, a handcart, or the like. This is not specifically limited in embodiments of this application.

As communication and radar technologies and the like rapidly develop, an electromagnetic environment becomes increasingly complex, leading to a higher signal frequency. Featuring a wide frequency band, a narrow beam, a strong anti-interference capability, and the like, a millimeter-wave signal is widely used in vehicle driving assistance, wireless communication, and other fields.

At present, methods for generating a millimeter-wave signal using a traditional electronic technology mainly include a generation method using a millimeter-wave phase-locked loop, microwave frequency multiplication, and optical heterodyning.

In the generation method using a millimeter-wave phase-locked loop, an output frequency of a voltage-controlled oscillator (voltage-controlled oscillator, VCO) is positively correlated with a drive voltage. Therefore, a voltage that linearly changes over time may be used to drive the voltage-controlled oscillator (VCO), to generate a linear frequency-modulated signal. However, the linear frequency-modulated signal directly generated in this way has poor linearity. The linearity of the generated signal can be improved by locking the linear frequency-modulated signal to a reference source with good performance via a phase-locked loop. Because it is difficult for the phase-locked loop to directly generate a high-frequency millimeter-wave signal, up-conversion needs to be performed on the signal. However, up-conversion on two electrical signals continues to increase previously high phase noise. Therefore, a method that can generate a millimeter-wave signal with low phase noise is urgently needed.

To resolve the foregoing problems, this application provides a system. The following describes embodiments of this application with reference to the accompanying drawings in embodiments of this application. Terms used in implementations of this application are merely used to explain specific embodiments of this application, but are not intended to limit this application.

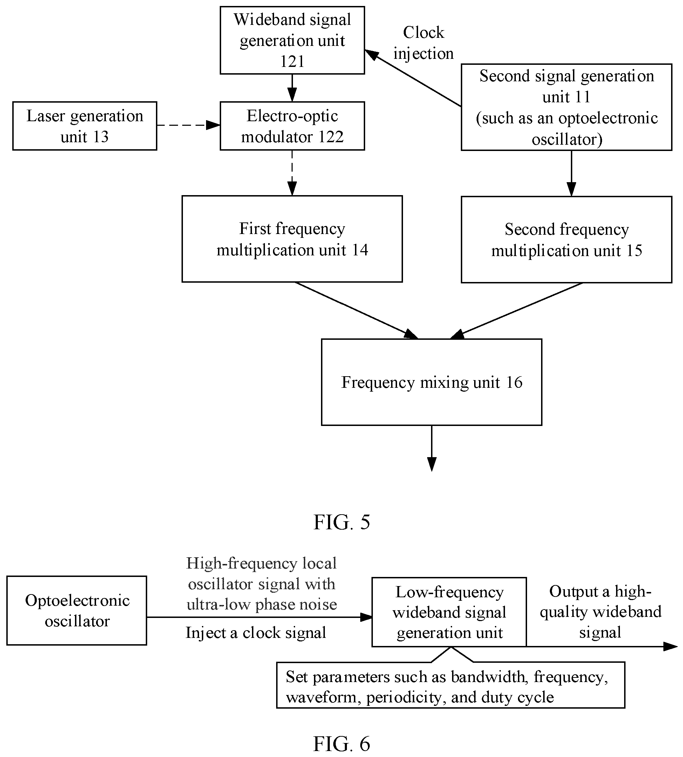

FIG. 4 and FIG. 5 are diagrams of structures of a system 10 according to an embodiment of this application. The system 10 may include all or some of a second signal generation unit 11, a wideband signal generation unit 121, an electro-optic modulator 122, a laser generation unit 13, a first frequency multiplication unit 14, a second frequency multiplication unit 15, and a frequency mixing unit 16.

In a possible implementation, the second signal generation unit 11 may be configured to generate a first single-frequency signal. The second signal generation unit 11 may be an optoelectronic oscillator. The optoelectronic oscillator is configured to generate the first single-frequency signal.

Phase noise of a traditional microwave oscillator decreases as a frequency increases. The optoelectronic oscillator converts laser energy into microwave signal energy through an optoelectronic feedback loop technology, and can output a stable low-noise electrical signal, with a Q value as high as 10. In the optoelectronic oscillator (optoelectronic oscillator, OEO), an optical energy storage element with a high quality factor is used as a resonant cavity of the oscillator. The OEO generally includes a closed feedback loop formed by a microwave photonic link (microwave photonic link, MPL), a microwave amplifier, and a microwave band-pass filter.

In a possible implementation, the optoelectronic oscillator may generate a microwave signal (namely, the first single-frequency signal) with low phase noise. The first single-frequency signal may be used as a local oscillator signal of the low-frequency wideband signal generation unit 121. In addition, frequency multiplication may be performed on the first single-frequency signal in electrical domain to generate a high-frequency single-frequency signal with low phase noise.

Phase noise, abbreviated to PN, is a random variation in a phase of an output signal of a system (for example, various radio frequency devices) due to various types of noise. It is an important indicator to measure frequency stability of a frequency standard source (for example, a high-stability crystal oscillator, an atom frequency standard, or the like).

In embodiments of this application, to generate a millimeter-wave signal with low phase noise, the system may include an optical domain branch and an electrical domain branch. Frequency multiplication is performed on a wideband signal in the optical domain branch and on a single-frequency signal in the electrical domain branch. Frequency mixing is performed on signals obtained after frequency multiplication is performed in the two domain branches, to obtain a millimeter-wave signal. The following describes the optical domain branch and the electrical domain branch.

About the optical domain branch:
In a possible implementation, the system may include the wideband signal generation unit 121, configured to generate a first wideband signal.

In a possible implementation, the system may further include the electro-optic modulator 122. The electro-optic modulator 122 is configured to modulate the first wideband signal onto an optical carrier.

In a possible implementation, when generating the first wideband signal, the wideband signal generation unit 121 is specifically configured to generate the first wideband signal using the first single-frequency signal as a clock signal.

In a possible implementation, a fixed-frequency signal (the first single-frequency signal, namely, an optoelectronic local oscillator signal with low phase noise) from the optoelectronic oscillator is split into two signals through a power splitter. One of the signals is sent to a clock end (for example, a clock in port) of the wideband signal generation unit 121, to replace an internal clock of the wideband signal generation unit 121 and drive a linear frequency-modulated signal with low phase noise to be generated. In other words, the wideband signal generation unit 121 uses the optoelectronic local oscillator signal with low phase noise for clock injection. In comparison with an internal clock solution, a signal output by the wideband signal generation unit 121 has low phase noise and a high signal-to-noise ratio.

It can be learned from an experiment that in embodiments of this application, in comparison with an internal clock solution of an arbitrary waveform generator, phase noise of an output millimeter-wave signal is reduced by more than 25 dB at a frequency offset of 1 MHz. In embodiments of this application, in comparison with the internal clock solution of the arbitrary waveform generator, a signal-to-noise ratio of an output wideband millimeter-wave signal is increased by more than 9 dB.

The wideband signal generation module may be an arbitrary waveform generator, a direct digital frequency synthesis signal generator, or the like. As a special signal source, the arbitrary waveform generator not only has a basic function of a conventional signal generator, but also can simulate and generate a more complex and variable waveform that cannot be implemented by another signal generator. The arbitrary waveform generator has an internal clock and an external clock injection port. Both types of clocks may be used to drive a required signal to be generated (in embodiments of this application, the first single-frequency signal may be injected into the external clock injection port). The direct digital frequency synthesis signal generator can improve frequency stability and accuracy of the signal generator to a same level as a reference frequency, and perform fine frequency adjustment in a wide frequency range. A signal source designed through this method can work in a modulation state, adjust an output level, and output various waveforms.

In a possible implementation, the wideband signal generation unit 121 may receive a control signal. The control signal indicates at least one of signal waveform, signal frequency, signal bandwidth, signal periodicity, and signal duty cycle. The wideband signal generation unit 121 generates, based on the control signal, the first wideband signal that meets a requirement of the control signal. The wideband signal generation module is configured to generate a low-frequency linear frequency-modulated signal. The low-frequency wideband signal generation unit 121 not only can generate a low-frequency wideband signal with low phase noise and a high signal-to-noise ratio, but also can adjust waveform, frequency, bandwidth, periodicity, duty cycle, and another parameter of the wideband signal because the generated signal is not limited by an injected clock signal and has universality.

In a possible implementation, the system further includes the laser generation unit 13, configured to generate the optical carrier. The electro-optic modulator 122 may modulate the first wideband signal onto the optical carrier.

In a possible implementation, the electro-optic modulator 122 may be a mach-zehnder modulator. The mach-zehnder modulator (mach-zehnder modulator, MZM) splits input light into two equal signals, which respectively enter two optical tributaries of the modulator. The two optical tributaries are made of an electro-optic material, and their refractive indexes vary with a magnitude of an externally applied electrical signal. Because a change in the refractive index of the optical tributary leads to a change in a signal phase, the first wideband signal into which output signals of the two optical tributaries of the modulator are combined is an interference signal with a varying intensity in optical domain. This is equivalent to converting a change in the electrical signal into a change in the first wideband signal in optical domain, to modulate a light intensity. In short, the modulator may implement modulation of different sidebands by controlling a bias voltage of the modulator.

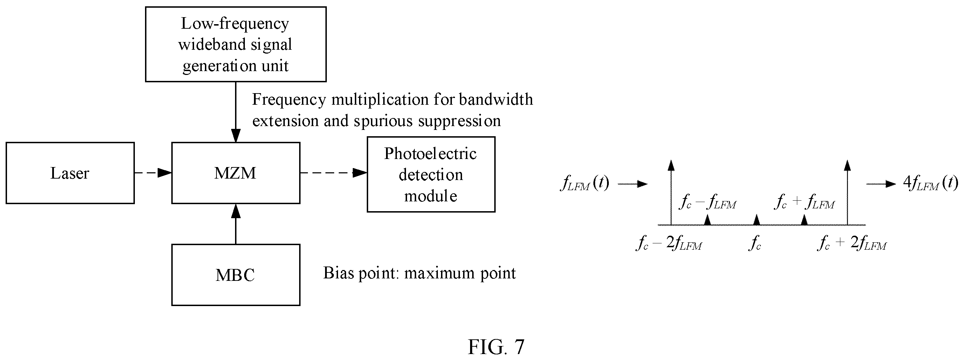

With reference to FIG. 7, the low-frequency linear frequency-modulated signal generated by the wideband signal generation unit 121 drives the MZM. A high-order harmonic wave required by the system is generated by optimizing a bias of the MZM. Then, a frequency-multiplied signal of a drive signal is obtained through beating with a detector.

Optionally, an instantaneous frequency of the linear frequency-modulated signal may be expressed as follows:

$$f_{LFM}(t) = f_0 + kt (0 \leq t \leq T) \qquad (1)$$

$f_0$ is a start frequency of the linear frequency-modulated signal. $T$ is a time width. $k$ is a frequency modulation slope.

In a possible implementation, the system may include the first frequency multiplication unit 14, configured to perform frequency multiplication on the first wideband signal in optical domain to obtain a second wideband signal. Specifically, frequency multiplication may be performed on the first wideband signal in optical domain through an optical frequency multiplication technology. The first frequency multiplication unit 14 may perform photoelectric conversion on the first wideband signal in optical domain, to convert the first wideband signal into an electrical signal in optical domain.

For example, as shown in FIG. 6, based on signal bandwidth extension of the optical frequency multiplication technology, a frequency and bandwidth of the signal generated by the low-frequency wideband signal generation unit 121 are further increased through frequency multiplication in optical domain, to generate a high-quality wideband signal.

In a possible implementation, the modulated first wideband signal of the linear frequency-modulated signal may be expressed as follows in optical domain:

$$E_{\mathrm{MZM}}(t) = E_{in} \left[ J_0(m) - 2J_2(m) \cos 2\pi f_{\mathrm{LFM}}(t)t \right] \qquad (2)$$

$E_{in}$ is an optical carrier signal generated by the laser generation module. $J_n(m)$ is a coefficient of a Bessel function of the first kind and order $n$. $m$ is a modulation factor.

In a possible implementation, the first frequency multiplication unit 14 may be a photoelectric detector. The first wideband signal is sent to the photoelectric detector in optical domain for photoelectric conversion, to obtain a linear frequency-modulated signal with a high frequency (for example, quadruple frequency). An instantaneous frequency of the linear frequency-modulated signal may be expressed as follows:

$$f_{LFM}{}'(t) = 4f_0 + 4kt (0 \leq t \leq T) \qquad (3)$$

In this application, a frequency and bandwidth of the signal are further increased through frequency multiplication in optical domain, to generate a high-quality wideband signal.

About the electrical domain branch:
In a possible implementation, the second signal generation unit 11 may generate the first single-frequency signal. The second frequency multiplication unit 15 is configured to perform frequency multiplication on the first single-frequency signal to obtain a second single-frequency signal.

The frequency mixing unit 16 is configured to perform frequency mixing on the second wideband signal and the second single-frequency signal to obtain a millimeter-wave signal.

Frequency mixing is a process of mixing two electrical signals with different frequencies through a non-linear element, such as a diode, and obtaining a signal with a third frequency through a frequency selection loop. An apparatus that completes this process is called a frequency mixer. Two oscillations with different frequencies are converted into a new oscillation correlated with both through a non-linear device. A frequency of the new oscillation is a difference between the two different frequencies, and an amplitude envelope is consistent with one of them.

After bandwidth extension, a signal frequency is relatively low and needs to be further increased to a high frequency through frequency mixing. A fixed-frequency signal from the optoelectronic oscillator is split into two signals (in the optical domain branch and the electrical domain branch) through a power splitter. Frequency mixing is performed on the two signals. Phase noise of a signal generated after frequency mixing is restricted by the two signals. Both signals have low phase noise. A wideband millimeter-wave signal with low phase noise can be generated.

Frequency multiplication on a wideband signal in electrical domain causes in-band aliasing. Consequently, phase noise of a signal is increased. In embodiments of this application, frequency multiplication is performed on a single-frequency signal in electrical domain and on a wideband signal in optical domain, so that a signal with low phase noise can be obtained.

In a possible implementation, a quantity of times frequency multiplication is performed on the first wideband signal in optical domain is less than a quantity of times frequency multiplication is performed on the first single-frequency signal. It should be understood that efficiency of performing frequency multiplication for a plurality of times in optical domain is low. Therefore, more frequency components in frequency mixing are generated in electrical domain as much as possible.

It should be understood that considering a cost limitation, because a high-frequency detector has a high cost, a frequency obtained after optical frequency multiplication may be not too high from a perspective of cost control.

In a possible implementation, the system further includes a transmitting unit, configured to transmit the millimeter-wave signal to an environment.

Compared with the conventional technology, embodiments of this application can reduce phase noise and increase bandwidth and a signal-to-noise ratio of a millimeter-wave signal. It can be learned from a radar equation and radar ranging, velocity measurement, and angle measurement accuracy formulas that an increase in the signal-to-noise ratio leads to improvements in a detection distance and ranging, velocity measurement, and angle measurement accuracy of a radar.

$$d_{max} = \left( \frac{\sigma P_t G_{TX} G_{RX} \lambda^2 T_{meas}}{(4\pi)^3 SNR_{min} \cdot KTF} \right)^{\frac{1}{4}} \qquad (4)$$

$d_{max}$ is a maximum detection distance. $SNR_{min}$ is a minimum detectable signal power.

$$R_{acc} = \frac{R_{res}}{\sqrt{2SNR}} \qquad (5)$$

$R_{acc}$ is ranging accuracy (minimum root mean square error). $R_{res}$ is a range resolution. $SNR$ is a signal-to-noise ratio.

$$V_{acc} = \frac{V_{res}}{\sqrt{2SNR}} \qquad (6)$$

$V_{acc}$ is velocity measurement accuracy. $V_{res}$ is a velocity resolution. $SNR$ is a signal-to-noise ratio.

$$a_{acc} = \frac{\theta_{3dB}}{1.6\sqrt{2SNR}} \qquad (7)$$

$a_{acc}$ is azimuth or pitch angle measurement accuracy. $\theta_{3dB}$ is 3 dB bandwidth. SNR is a signal-to-noise ratio.

Embodiments of this application provide the system, including the wideband signal generation unit 121, configured to generate the first wideband signal; the second signal generation unit 11, configured to generate the first single-frequency signal; the first frequency multiplication unit 14, configured to perform frequency multiplication on the first wideband signal in optical domain to obtain the second wideband signal; the second frequency multiplication unit 15, configured to perform frequency multiplication on the first single-frequency signal to obtain the second single-frequency signal; and the frequency mixing unit 16, configured to perform frequency mixing on the second wideband signal and the second single-frequency signal to obtain the millimeter-wave signal. Frequency multiplication on a wideband signal in electrical domain causes in-band aliasing. Consequently, phase noise of a signal is increased. In embodiments of this application, frequency multiplication is performed on a single-frequency signal in electrical domain and on a wideband signal in optical domain, so that a millimeter-wave signal with low phase noise can be obtained.

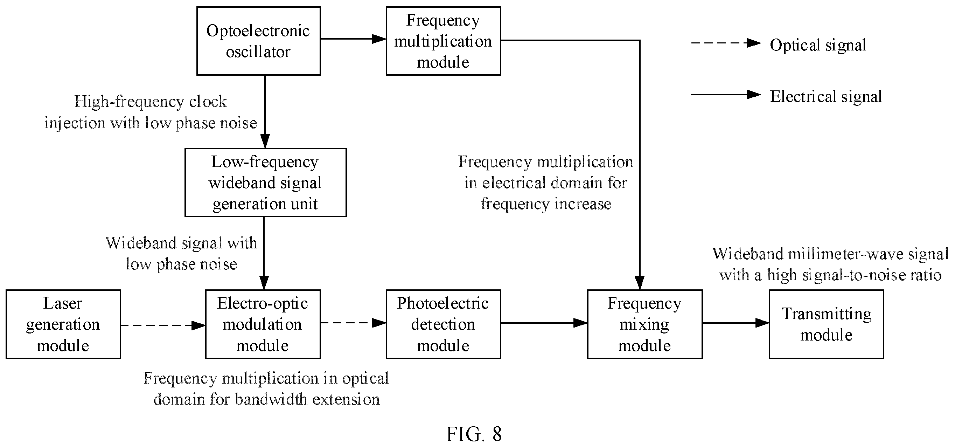

FIG. 8 is a specific diagram of a system. A microwave signal with ultra-low phase noise is generated through optoelectronic oscillation and divided into two signals. One of the signals is used as a local oscillator source of a low-frequency wideband signal generation unit to generate a high-quality low-frequency wideband signal. In addition, frequency multiplication is performed in optical domain to generate a wideband signal whose pulse width, bandwidth, and center frequency are adjustable. Frequency multiplication is performed on the other signal to generate a high-frequency single-frequency signal with low phase noise. Up-conversion is performed on the generated single-frequency signal and wideband signal, to finally generate a millimeter-wave signal whose frequency and bandwidth are adjustable and signal-to-noise ratio is increased.

An embodiment of this application further provides a signal generation method. The method may be implemented based on the foregoing system. The method includes:

generating, by a wideband signal generation unit, a first wideband signal;
generating, by a second signal generation unit, a first single-frequency signal, where the second signal generation unit is an optoelectronic oscillator, and the first single-frequency signal is further used as a clock signal of the wideband signal generation unit;
performing, by a first frequency multiplication unit, frequency multiplication on the first wideband signal in optical domain to obtain a second wideband signal;

performing, by a second frequency multiplication unit, frequency multiplication on the first single-frequency signal to obtain a second single-frequency signal; and

performing, by a frequency mixing unit, frequency mixing on the second wideband signal and the second single-frequency signal to obtain a millimeter-wave signal.

In a possible implementation, phase noise of the first single-frequency signal is lower than -105 dBc/Hz when a frequency offset is greater than 1 kHz.

In a possible implementation, the system further includes an electro-optic modulator, and the method further includes:

modulating, by the electro-optic modulator, the first wideband signal onto an optical carrier.

In a possible implementation, when generating the first wideband signal, the wideband signal generation unit is specifically configured to generate the first wideband signal using the first single-frequency signal as a clock signal.

In a possible implementation, a quantity of times frequency multiplication is performed on the first wideband signal in optical domain is less than a quantity of times frequency multiplication is performed on the first single-frequency signal.

In a possible implementation, generating, by the wideband signal generation unit, the first wideband signal includes:

receiving a control signal, where the control signal indicates at least one of signal waveform, signal frequency, signal bandwidth, signal periodicity, and signal duty cycle; and

generating, by the wideband signal generation unit based on the control signal, the first wideband signal that meets a requirement of the control signal.

In a possible implementation, the method further includes:

generating, by a laser generation unit, the optical carrier.

In a possible implementation, the method further includes:

transmitting, by a transmitting unit, the millimeter-wave signal to an environment.

For more descriptions of the signal generation method, refer to the description in the foregoing embodiments. Similarities are not described herein again.

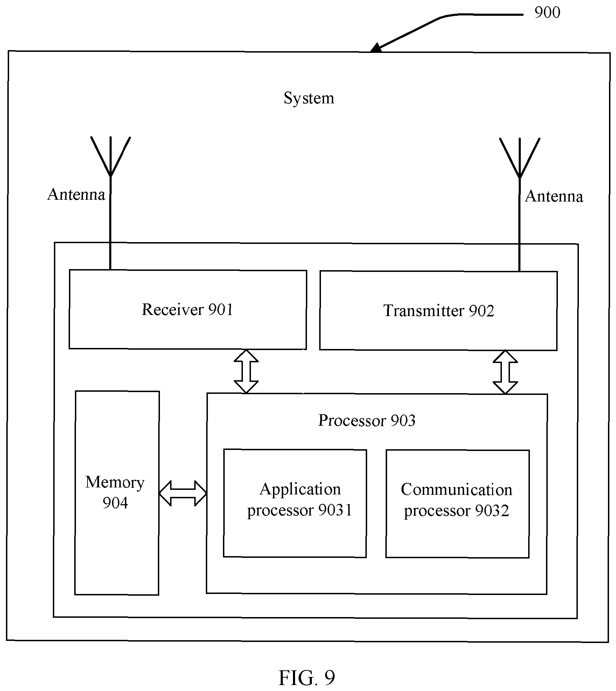

The following describes a system provided in an embodiment of this application. FIG. 9 is a diagram of a structure of a system according to an embodiment of this application. Specifically, a system 900 includes a receiver 901, a transmitter 902, a processor 903, and a memory 904 (there may be one or more processors 903 in the system 900, and one processor is used as an example in FIG. 9). The processor 903 may include an application processor 9031 and a communication processor 9032. In some embodiments of this application, the receiver 901, the transmitter 902, the processor 903, and the memory 904 may be connected through a bus or in another manner.

The memory 904 may include a read-only memory and a random access memory, and provide instructions and data for the processor 903. A part of the memory 904 may further include a non-volatile random access memory (non-volatile random access memory, NVRAM). The memory 904 stores a processor and operation instructions, an executable module, a data structure, a subset thereof, or an extended set thereof. The operation instructions may include various operation instructions for implementing various operations.

The processor 903 controls an operation of a radar system (including an antenna, the receiver 901, and the transmitter 902). During specific application, components of the radar system are coupled together through a bus system. In addition to a data bus, the bus system may include a power bus, a control bus, a status signal bus, and the like. However, for clear description, various types of buses in the figure are marked as the bus system.

The processor 903 is configured to process a reflected signal received by the receiver in the radar system, to obtain a processing result. The processing result is used for object detection.

The processor 903 may be an integrated circuit chip and has a signal processing capability. In an implementation process, the steps in the foregoing method may be implemented by using a hardware integrated logic circuit in the processor 903 or by using instructions in a form of software. The processor 903 may be a general-purpose processor, a digital signal processor (digital signal processor, DSP), a microprocessor, or a microcontroller; or may further include an application-specific integrated circuit (application-specific integrated circuit, ASIC), a field-programmable gate array (field-programmable gate array, FPGA) or another programmable logic device, a discrete gate or transistor logic device, or a discrete hardware component. The processor 903 can implement or execute various methods, steps, and logical block diagrams disclosed in embodiments of this application. The general-purpose processor may be a microprocessor, or the processor may be any conventional processor or the like. The steps in the method disclosed with reference to embodiments of this application may be directly performed and completed by a hardware decoding processor, or may be performed and completed by using a combination of hardware in the decoding processor and a software module. The software module may be located in a mature storage medium in the art, such as a random access memory, a flash memory, a read-only memory, a programmable read-only memory, an electrically erasable programmable memory, or a register. The storage medium is located in the memory 904. The processor 903 reads information in the memory 904, and completes object detection in combination with hardware in the processor 903.

The receiver 901 may be configured to receive input digital or character information, and generate a signal input related to setting and function control of the radar system. The transmitter 902 may be configured to output the digital or character information through a first interface. The transmitter 902 may be further configured to send instructions to a disk group through the first interface, to modify data in the disk group.

The system 900 may be a vehicle-mounted device in a smart cabin scenario, a terminal device in a smart home scenario, or the like.

An embodiment of this application further provides a computer program product. When the computer program product is run on a computer, the computer is enabled to perform the function adjustment method described in the foregoing embodiments.

An embodiment of this application further provides a computer-readable storage medium. The computer-readable storage medium stores a program used to perform signal processing. When the program is run on a computer, the computer is enabled to perform the function adjustment method described in the foregoing embodiments.

In addition, it should be noted that the apparatus embodiments described above are merely examples. The units described as separate parts may or may not be physically separate, and parts displayed as units may or may not be physical units, that is, may be located at one position, or may be distributed on a plurality of network units. Some or all the modules may be selected according to actual needs to achieve the objectives of the solutions of embodiments. In addition, in the accompanying drawings of the apparatus embodiments provided by this application, connection relationships between modules indicate that the modules have communication connections with each other, which may be specifically implemented as one or more communication buses or signal cables.

Based on the description of the foregoing implementations, a person skilled in the art may clearly understand that this application may be implemented by software in addition to necessary universal hardware, or by dedicated hardware, including an application-specific integrated circuit, a dedicated CPU, a dedicated memory, a dedicated component, and the like. Generally, any functions that can be performed by a computer program can be easily implemented by using corresponding hardware. Moreover, a specific hardware structure used to achieve a same function may be in various forms, for example, in a form of an analog circuit, a digital circuit, or a dedicated circuit. However, as for this application, software program implementation is a better implementation in most cases. Based on such an understanding, the technical solutions of this application essentially or the part contributing to the conventional technology may be implemented in a form of a software product. The computer software product is stored in a readable storage medium, for example, a floppy disk, a USB flash drive, a removable hard disk, a ROM, a RAM, a magnetic disk, or an optical disc of a computer, and includes several instructions for instructing a computer device (which may be a personal computer, a training device, a network device, or the like) to perform the method in embodiments of this application.

All or some of the foregoing embodiments may be implemented by using software, hardware, firmware, or any combination thereof. When software is used to implement the embodiments, all or some of the embodiments may be implemented in a form of a computer program product.

The computer program product includes one or more computer instructions. When the computer program instructions are loaded and executed on a computer, all or some of the procedures or functions according to embodiments of this application are generated. The computer may be a general-purpose computer, a dedicated computer, a computer network, or another programmable apparatus. The computer instructions may be stored in a computer-readable storage medium, or may be transmitted from a computer-readable storage medium to another computer-readable storage medium. For example, the computer instructions may be transmitted from a website, computer, training device, or data center to another website, computer, training device, or data center in a wired (for example, a coaxial cable, an optical fiber, or a digital subscriber line (DSL)) or wireless (for example, infrared, radio, or microwave) manner. The computer-readable storage medium may be any usable medium that can be stored by the computer, or a data storage device, such as a training device or a data center, integrating one or more usable media. The usable medium may be a magnetic medium (for example, a floppy disk, a hard disk, or a magnetic tape), an optical medium (for example, DVD), a semiconductor medium (for example, a solid-state drive (Solid-State Drive, SSD)), or the like.

**Claims**

**1.** A system, comprising:

> a wideband signal generation unit, configured to generate a first wideband signal;
> a second signal generation unit, configured to generate a first single-frequency signal, wherein the second signal generation unit is an optoelectronic oscillator, and the first single-frequency signal is further used as a clock signal of the wideband signal generation unit;

a first frequency multiplication unit, configured to perform frequency multiplication on the first wideband signal in optical domain to obtain a second wideband signal;

a second frequency multiplication unit, configured to perform frequency multiplication on the first single-frequency signal to obtain a second single-frequency signal; and

a frequency mixing unit, configured to perform frequency mixing on the second wideband signal and the second single-frequency signal to obtain a millimeter-wave signal.

2. The system according to claim 1, wherein phase noise of the first single-frequency signal is lower than -105 dBc/Hz when a frequency offset is greater than 1 kHz.

3. The system according to claim 1 or 2, wherein the system further comprises an electro-optic modulator;

the electro-optic modulator is configured to modulate the first wideband signal onto an optical carrier; and the first frequency multiplication unit is specifically configured to perform frequency multiplication on the first wideband signal modulated onto the optical carrier.

4. The system according to any one of claims 1 to 3, wherein a quantity of times frequency multiplication is performed on the first wideband signal in optical domain is less than a quantity of times frequency multiplication is performed on the first single-frequency signal.

5. The system according to any one of claims 1 to 4, wherein when generating the first wideband signal, the wideband signal generation unit is specifically configured to:

receive a control signal, wherein the control signal indicates at least one of signal waveform, signal frequency, signal bandwidth, signal periodicity, and signal duty cycle; and

generate, based on the control signal, the first wideband signal that meets a requirement of the control signal.

6. The system according to any one of claims 1 to 5, wherein the system further comprises:
a laser generation unit, configured to generate the optical carrier.

7. The system according to any one of claims 1 to 6, wherein the system further comprises:
a transmitting unit, configured to transmit the millimeter-wave signal to an environment.

8. A signal generation method, wherein the method comprises:

generating, by a wideband signal generation unit, a first wideband signal;

generating, by a second signal generation unit, a first single-frequency signal, wherein the second signal generation unit is an optoelectronic oscillator, and the first single-frequency signal is further used as a clock signal of the wideband signal generation unit;

performing, by a first frequency multiplication unit, frequency multiplication on the first wideband signal in optical domain to obtain a second wideband signal;

performing, by a second frequency multiplication unit, frequency multiplication on the first single-frequency signal to obtain a second single-frequency signal; and

performing, by a frequency mixing unit, frequency mixing on the second wideband signal and the second single-frequency signal to obtain a millimeter-wave signal.

9. The method according to claim 8, wherein phase noise of the first single-frequency signal is lower than -105 dBc/Hz when a frequency offset is greater than 1 kHz.

10. The method according to claim 8 or 9, wherein the system further comprises an electro-optic modulator, and the method further comprises:
modulating, by the electro-optic modulator, the first wideband signal onto an optical carrier.

11. The method according to any one of claims 8 to 10, wherein a quantity of times frequency multiplication is performed on the first wideband signal in optical domain is less than a quantity of times frequency multiplication is performed on the first single-frequency signal.

**12.** The method according to any one of claims 8 to 11, wherein generating, by the wideband signal generation unit, the first wideband signal comprises:

receiving a control signal, wherein the control signal indicates at least one of signal waveform, signal frequency, signal bandwidth, signal periodicity, and signal duty cycle; and
generating, by the wideband signal generation unit based on the control signal, the first wideband signal that meets a requirement of the control signal.

**13.** The method according to any one of claims 8 to 12, wherein the method further comprises:
generating, by a laser generation unit, the optical carrier.

**14.** The method according to any one of claims 8 to 13, wherein the method further comprises:
transmitting, by a transmitting unit, the millimeter-wave signal to an environment.

**15.** A radar system, comprising a transmitter and a receiver; wherein

the transmitter comprises the system according to any one of claims 1 to 7; and
the receiver is configured to receive a reflected signal of a signal transmitted by the transmitter.

**16.** The system according to claim 15, wherein the system is a chip.

**17.** A device, comprising the radar system according to claim 15 or 16 and a processing circuit; wherein
the processing circuit is configured to process the reflected signal received by the receiver in the radar system, to obtain a processing result; and the processing result is used for object detection.

**18.** The device according to claim 17, wherein the device is a smart home device or a vehicle-mounted device.

FIG. 1a

FIG. 1b

FIG. 1c

FIG. 2

FIG. 3

FIG. 4

```
┌─────────────────────┐                    Clock
│   Wideband signal   │                  injection
│  generation unit    │◄─────────┐    ┌──────────────────────┐
│        121          │           \   │ Second signal generation │
└─────────────────────┘            \  │       unit 11            │
           │                        \ │ (such as an optoelectronic│
           ▼                         \│     oscillator)          │
┌─────────────────────┐              └──────────────────────┘
┌──────────────┐   │   Electro-optic     │                     │
│   Laser      │---►│   modulator 122 │                     │
│ generation   │   └─────────────────────┘                     ▼
│  unit 13     │              ┊
└──────────────┘              ┊
                              ▼
┌─────────────────────┐          ┌─────────────────────┐
│   First frequency   │          │   Second frequency  │
│ multiplication unit 14│        │ multiplication unit 15│
└─────────────────────┘          └─────────────────────┘
           \                            /
            \                          /
             ▼                        ▼
         ┌──────────────────────────────┐
         │   Frequency mixing unit 16   │
         └──────────────────────────────┘
                        │
                        ▼
```

FIG. 5

```
                    High-frequency local
                    oscillator signal with
┌──────────────┐    ultra-low phase noise   ┌──────────────┐   Output a high-
│ Optoelectronic│ ──────────────────────►   │ Low-frequency │   quality wideband
│  oscillator   │                            │ wideband signal│──► signal
└──────────────┘    Inject a clock signal    │ generation unit│
                                             └──────────────┘
                                  ┌──────────────────────────────────┐
                                  │ Set parameters such as bandwidth, frequency, │
                                  │ waveform, periodicity, and duty cycle │
                                  └──────────────────────────────────┘
```

FIG. 6

FIG. 7

FIG. 8

900

System

Antenna

Antenna

| Receiver 901 | Transmitter 902 |

Processor 903

| Memory 904 | Application processor 9031 | Communication processor 9032 |

FIG. 9

## INTERNATIONAL SEARCH REPORT

International application No.

**PCT/CN2023/142787**

| A. | CLASSIFICATION OF SUBJECT MATTER |
|---|---|

H04B10/2575(2013.01)i;  H04B10/50(2013.01)i;  H04B10/40(2013.01)i

According to International Patent Classification (IPC) or to both national classification and IPC

| B. | FIELDS SEARCHED |
|---|---|

Minimum documentation searched (classification system followed by classification symbols)

IPC:  H04B

Documentation searched other than minimum documentation to the extent that such documents are included in the fields searched

Electronic data base consulted during the international search (name of data base and, where practicable, search terms used)

CNABS; CNTXT; CNKI; VEN; DWPI; EPTXT; USTXT; WOTXT; IEEE: 雷达, 毫米波, 宽带, 倍频, 光域, 调制器, 马赫, 光电探测, 变频, 混频, 拍频, 时钟, 振荡, radar, millimeter, modulator, MZM, OEO, Mach-zehnder, clock, diode, frequency, mixer, optical, double, oscillator

| C. | DOCUMENTS CONSIDERED TO BE RELEVANT | |
|---|---|---|

| Category* | Citation of document, with indication, where appropriate, of the relevant passages | Relevant to claim No. |
|---|---|---|
| A | CN 110350981 A (NANJING UNIVERSITY OF AERONAUTICS AND ASTRONAUTICS) 18 October 2019 (2019-10-18) <br> description, paragraphs [0002] and [0011]-[0045], and figures 1-6c | 1-18 |
| A | CN 214125246 U (BRAINWARE TERAHERTZ INFORMATION TECHNOLOGY CO., LTD.) 03 September 2021 (2021-09-03) <br> entire document | 1-18 |
| A | CN 113541806 A (INFORMATION ENGINEERING UNIVERSITY) 22 October 2021 (2021-10-22) <br> entire document | 1-18 |
| A | CN 114978331 A (CHINA ACADEMY OF SPACE TECHNOLOGY) 30 August 2022 (2022-08-30) <br> entire document | 1-18 |
| A | WO 2021217216 A1 (THE UNIVERSITY OF SYDNEY) 04 November 2021 (2021-11-04) <br> entire document | 1-18 |

☐ Further documents are listed in the continuation of Box C.          ☑ See patent family annex.

| * | Special categories of cited documents: | "T" | later document published after the international filing date or priority date and not in conflict with the application but cited to understand the principle or theory underlying the invention |
|---|---|---|---|
| "A" | document defining the general state of the art which is not considered to be of particular relevance | | |
| "D" | document cited by the applicant in the international application | "X" | document of particular relevance; the claimed invention cannot be considered novel or cannot be considered to involve an inventive step when the document is taken alone |
| "E" | earlier application or patent but published on or after the international filing date | | |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | "&" | document member of the same patent family |
| "P" | document published prior to the international filing date but later than the priority date claimed | | |

| Date of the actual completion of the international search | Date of mailing of the international search report |
|---|---|
| **13 March 2024** | **19 March 2024** |

| Name and mailing address of the ISA/CN | Authorized officer |
|---|---|
| **China National Intellectual Property Administration (ISA/CN)** <br> **China No. 6, Xitucheng Road, Jimenqiao, Haidian District, Beijing 100088** | |
| | Telephone No. |

Form PCT/ISA/210 (second sheet) (July 2022)

# EP 4 629 527 A1

## INTERNATIONAL SEARCH REPORT
### Information on patent family members

International application No.

**PCT/CN2023/142787**

| Patent document cited in search report | | | Publication date (day/month/year) | Patent family member(s) | | | Publication date (day/month/year) |
|---|---|---|---|---|---|---|---|
| CN | 110350981 | A | 18 October 2019 | CN | 110350981 | B | 26 June 2020 |
| CN | 214125246 | U | 03 September 2021 | None | | | |
| CN | 113541806 | A | 22 October 2021 | None | | | |
| CN | 114978331 | A | 30 August 2022 | CN | 114978331 | B | 06 June 2023 |
| WO | 2021217216 | A1 | 04 November 2021 | AU | 2021264332 | A1 | 24 November 2022 |
| | | | | EP | 4143603 | A1 | 08 March 2023 |
| | | | | US | 2023236285 | A1 | 27 July 2023 |
| | | | | CA | 3181380 | A1 | 04 November 2021 |

Form PCT/ISA/210 (patent family annex) (July 2022)

**EP 4 629 527 A1**

**Patent documents cited in the description**

- CN 202211713497